# EUROPEAN PATENT SPECIFICATION

(11) **EP 3 020 591 B1**
(45) Date of publication and mention of the grant of the patent: **06.05.2020**
(21) Application number: 15193175.5
(22) Date of filing: 05.11.2015
(51) Int. Cl.: B60L 1/00, B60L 55/00

(54) **POWER SOURCE DEVICE FOR VEHICLE**
STROMQUELLENVORRICHTUNG FÜR EIN FAHRZEUG
DISPOSITIF DE SOURCE DE PUISSANCE POUR VÉHICULE

(30) Priority: 13.11.2014 JP 2014230668
(43) Date of publication of application: 18.05.2016
(73) Proprietor: Toyota Jidosha Kabushiki Kaisha, Toyota-shi, Aichi 471-8571 (JP)
(72) Inventor: YUMITA, Osamu, Toyota-shi, Aichi 471-8571 (JP); UEO, Daisuke, Toyota-shi, Aichi 471-8571 (JP)
(74) Representative: TBK

(56) References cited:
- WO-A1-2014/068782
- WO-A1-2014/147781
- JP-A- 2004 236 472
- JP-A- 2014 204 454
- US-A1- 2012 193 983

## Description

### BACKGROUND OF THE INVENTION

### Field of the Invention

The present invention relates to a power source device for a vehicle, and in particular to a power source device for a vehicle capable of feeding electric power from the vehicle to an external device.

### Description of the Background Art

There are known power feed systems which use an electrically powered vehicle as a power source, and perform power conversion using an external power feed device to supply electric power to a house and electric appliances. For example, document JP 2013- 198 288 A describes a power feed system in which an external power feed device is connected to an electrically powered vehicle. In the system, direct current (DC) power output from the electrically powered vehicle to the external power feed device is converted into alternating current (AC) power using an inverter of the external power feed device, and the AC power is supplied to an external load.

A service receptacle may be provided within a vehicle interior for a user's convenience. The above publication does not consider as to whether or not to allow a service receptacle to be used during power feed to the outside of the vehicle in this case. It is often the case that no one is present within the vehicle interior during the power feed to the outside. If power feed from the service receptacle is allowed in such a case, for example when the user forgets to turn off an apparatus with being connected to the service receptacle, power feed may be continued without being noticed by the user, and the apparatus may be operated in an inappropriate state and broken down.

Further, if power is output from the service receptacle and exceeds a limit value of a total output current of the vehicle during the power feed to the outside of the vehicle, the power feed to the outside of the vehicle may be stopped.

Document US 2012/193983 A1 discloses a power source device and a vehicle. The power source device transmits by way of power cable control information for controlling a vehicle in the event of a power cut. The vehicle supplies power for an accumulator to the power source device by way of the power cable in accordance with the control information received, and reports to the power source device information regarding the remaining charge of the accumulator. Furthermore, the power source device supplies power from the accumulator to each electrical appliance within a residence. A display device displays information regarding the remaining charge of the accumulator.

Document WO 2014/068782 A1 discloses a vehicle in which an ECU is mounted. The vehicle is capable of external charging for charging a vehicle-mounted battery with electric power from the outside of the vehicle and external discharging for discharging electric power inside the vehicle to the outside of the vehicle. The ECU sets the control mode of the vehicle to any of a charging mode for performing the external charging, a discharging mode for performing the external discharging, and a traveling mode for causing the vehicle to travel. The ECU determines, according to the state of the vehicle, which of the charging mode and the discharging mode is prioritized when a user performs an operation for requesting the external discharging during the charging mode or when the user performs an operation for requesting the external charging during the discharging mode.

Document WO 2014/147781 A1 discloses a vehicle provided with an electrical storage device, a first connector capable of charging and discharging the power of the electrical storage device, a second connector capable of charging and discharging the power of the electrical storage device, and an ECU for controlling charging and discharging performed via the first connector and the charging and discharging performed via the second connector. The ECU selects and implements any one of the following according to the operation of an operation unit provided to a first plug connected to the first connector: discharging from the electrical storage device via the first connector, charging to the electrical storage device via the first connector, discharging from the electrical storage device via the second connector, and charging to the electrical storage device via the second connector.

Document JP 2004 236472 A discloses a controller of a vehicle comprising a car navigation system, a chargeable/dischargeable battery, a DC/AC inverter for converting power from the battery into commercial AC power, an accessary power outlet for outputting AC power to the outside of the vehicle, a circuit for predicting an AC power output request, and a circuit for controlling charge/discharge of a secondary battery such that the battery has a SOC higher than a normal level when the vehicle arrives at a goal registered in the car navigation system based on the prediction from the prediction circuit and information analyzed by the car navigation system.

Document JP 2014 204454 A discloses an electric power supply system and a vehicle provided with the same, as well as a control method of an electric power supply system. The electric power supply system comprises an electric power storage device, a connection part, an outlet, an electric power transmission part and an ECU. A connector for supplying electric power to external equipment is connected to the connection part. The outlet is for supplying electric power to electric equipment. The electric power transmission part can transmit electric power from the electric power storage device to the connection part and the outlet. The ECU controls the electric power transmission part so as to suppress electric power supply to the outlet when supplying electric power to the external equipment.

### SUMMARY OF THE INVENTION

An object of the present invention is to provide means allowing a power source of a vehicle to be capable of feeding power to the outside of the vehicle, with reduced possibility of failure to turn off an in-vehicle electric apparatus due to carelessness.

This object is achieved by a power source device for a vehicle according to claim 1. Advantageous further developments are as set forth in the dependent claims. Furthermore, a method of controlling a power supply from a power source as defined in claim 6 is provided.

In summary, one aspect of the present invention is directed to a power source device for a vehicle, including: a power source; a first connection unit capable of feeding power from the power source to an external device external to the vehicle; a second connection unit provided, within a vehicle interior, separately from the first connection unit; an AC output unit which is arranged to receive the voltage of the DC power source to generate an AC voltage, and to output the AC voltage to the second connection unit; an operating unit by which a user requests power feed from the first connection unit to the external device; and a control unit configured to control power supply from the power source to the first connection unit and the second connection unit. When the AC output unit is in operation and the control unit receives, from the operating unit, an input requesting the power feed to the external device, the control unit stops the operation of the AC output unit and causes the first connection unit to perform the power supply.

It is often the case that no one is present within the vehicle interior during the power feed to the outside. With the control as described above, even if an electric apparatus is connected to the second connection unit and is left in an operated state within the vehicle interior, the above control can prevent that the power feed to the electric apparatus is continued without being noticed by the user, and that the apparatus is operated in an inappropriate state.

Preferably, during the power feed from the first connection unit to the external device, the control unit is further configured to prohibit power supply from the second connection unit even if the control unit receives, from the operating unit, a request to use the second connection unit.

There may be a case where an upper limit of electric power which can be output as an entire device is set for the power source device for the vehicle. If electric power is output from the second connection unit to the electric apparatus within the vehicle interior during the power feed to the external device in such a case, the external device in operation may be stopped due to the limited electric power. With the control as described above, during the power feed from the first connection unit to the external device, even if a request to supply electric power to the second connection unit is made later, electric power is not supplied to the second connection unit. Accordingly, this can avoid a situation in which the external device is stopped.

Preferably, the power source device for the vehicle further includes a power detection unit configured to detect power supplied from the first connection unit to the external device. When the power detected by the power detection unit exceeds a predetermined value, the control unit is configured to limit power supply from the first connection unit.

With the configuration described above, the control unit can determine whether to feed power to the external device as requested or to limit or stop power feed, while monitoring electric power.

Preferably, the power source is a DC power source. The power source device for the vehicle further includes a DC output unit which is arranged to receive a voltage of the DC power source and to output a DC voltage for power feed to the first connection unit. The AC output unit includes an inverter. The DC output unit includes a power feed relay which is arranged to connect the DC power source and the first connection unit. When the control unit receives, from the operating unit, the input requesting the power feed to the external device, the control unit is configured to stop an operation of the inverter and to make the power feed relay conductive.

With the configuration as described above, the control unit can cause the AC output unit to stop an output of the AC voltage, and cause the DC output unit to output the DC voltage for power feed. It should be noted that, in order to cause the AC output unit to stop an output of the AC voltage, a relay may be provided at an exit of the AC output unit to interrupt the output.

The power source includes a secondary battery, and a fuel cell for charging the secondary battery.

With the configuration described above, even if the secondary battery has a small battery capacity, the power feed to the external device can be continued as long as the fuel cell is replenished with fuel.

Furthermore, another aspect of the present invention provides a method of controlling power supply from a power source of a vehicle, comprising controlling power supply from said power source to a first connection unit capable of feeding power from said power source to an external device, and a second connection unit provided, within a vehicle interior, separately from said first connection unit, wherein an AC output unit receives a voltage of the power source to generate an AC voltage and outputs the AC voltage to the second connection unit, and, when the AC output unit is in operation and a request for power feed from said first connection unit to an external device is received, stopping the operation of the AC output unit and performing the power supply to said first connection unit.

The present invention can avoid a situation in which, during the power feed to the outside of the vehicle, an in-vehicle electric apparatus continues operation without being noticed by the user.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a view showing a configuration of a vehicle equipped with a power source device for a vehicle in accordance with an embodiment, and a configuration of an external device connected to the vehicle.
Fig. 2 is a flowchart for illustrating control of power output to a service receptacle 190 performed by a vehicle ECU 300.
Fig. 3 is a flowchart for illustrating control of power feed to an external device 500 performed by vehicle ECU 300.
Fig. 4 is a flowchart for illustrating control of power monitoring during the power feed to external device 500 performed by vehicle ECU 300.

### DESCRIPTION OF THE PREFERRED EMBODIMENTS

Hereinafter, an embodiment of the present invention will be described in detail with reference to the drawings. It should be noted that identical or corresponding parts will be designated by the same reference numerals, and the description thereof will not be repeated.

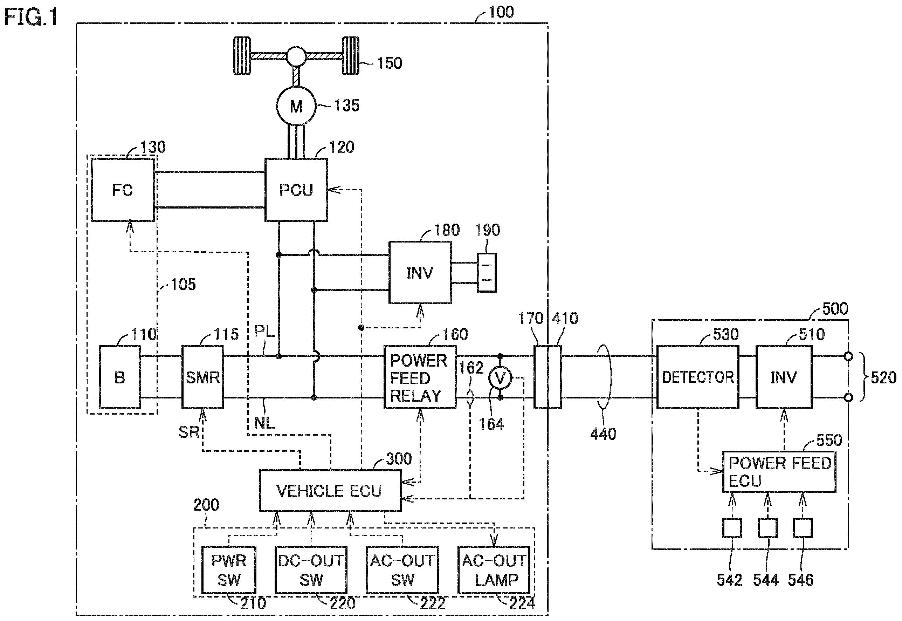

Fig. 1 is a view showing a configuration of a vehicle equipped with a power source device for a vehicle in accordance with the present embodiment, and a configuration of an external device connected to the vehicle.

Referring to Fig. 1, a vehicle 100 includes a power source 105, a system main relay (SMR) 115, a power control unit (PCU) 120, a motor 135, drive wheels 150, and a vehicle electronic control unit (ECU) 300 as a control device. The power source 105 includes a vehicle-mounted battery 110 and a fuel cell 130. The PCU 120 includes a converter, an inverter, and a capacitor, although they are not shown.

An external device 500 includes a detector 530 which detects electric leakage, an inverter 510, a power feed start switch 542, a power feed stop switch 544, an emergency stop switch 546, and a power feed ECU 550 which controls inverter 510.

The vehicle-mounted battery 110 is connected to the PCU 120 via a positive power line PL1 and a negative power line NL1. The vehicle-mounted battery 110 supplies electric power for generating a drive force for the vehicle 100 to the PCU 120. The vehicle-mounted battery 110 also stores electric power regenerated by the motor 135. The output of the vehicle-mounted battery 110 is, for example, approximately 200 V.

The vehicle-mounted battery 110 includes a voltage sensor and a current sensor which are not shown, and outputs a voltage VB and a current IB of the vehicle-mounted battery 110 detected by these sensors to the vehicle ECU 300.

One relay included in the SMR 115 is connected between a positive electrode of the vehicle-mounted battery 110 and the positive power line PL1 connected to the PCU 120, and the other relay is connected between a negative electrode of the vehicle-mounted battery 110 and the negative power line NL1. Based on a control signal SR from the ECU 300, the SMR 115 switches between supply and interruption of electric power between the vehicle-mounted battery 110 and the PCU 120.

The PCU 120 includes a boost converter which converts a voltage of the fuel cell 130 and a voltage of the vehicle-mounted battery 110 into a DC voltage for driving the motor, and an inverter which receives the DC voltage for driving the motor and drives the motor 135. The inverter inside the PCU 120 converts DC power into AC power and drives the motor 135, based on a control signal from the vehicle ECU 300.

The motor 135 is an AC rotating electrical machine, and is, for example, a permanent magnet-type synchronous motor including a rotor having a permanent magnet embedded therein.

The drive torque of the motor 135 is transmitted to drive wheels 150 and causes the vehicle 100 to travel. During regenerative braking of the vehicle 100, the motor 135 can generate electric power using the rotational force of the drive wheels 150. Then, the generated electric power is converted by the PCU 120 into charging power for the vehicle-mounted battery 110.

It should be noted that, although an example in which the vehicle 100 is a fuel cell vehicle has been described, the vehicle 100 may be a hybrid vehicle. In that case, the vehicle 100 further includes an engine and a power generator. The power generator can generate electric power by the rotation of the engine, and can charge vehicle-mounted battery 110 using this generated electric power. The vehicle 100 may also be an electric vehicle not equipped with an engine.

In recent years, electric vehicles, hybrid vehicles, and fuel cell vehicles have attracted attention as power source devices. These vehicles are equipped with a large-capacity vehicle-mounted battery for driving each vehicle, and the hybrid vehicles and the fuel cell vehicles also have a power generating function. Accordingly, feeding power from these vehicles to external equipment, electric apparatus, and the like is under consideration.

Since a large amount of power can be generated in these fuel cell vehicles and the like, these vehicles not only can supply power to equipment and the like external to each vehicle, but also can be provided with a service receptacle having a relatively large output within a vehicle interior.

The power source device for the vehicle in accordance with the present embodiment includes the power source 105, an AC output unit (an inverter 180) which receives a voltage of power source 105 and outputs an AC voltage, a service receptacle 190 provided within a vehicle interior, a DC output unit (a power feed relay 160) which receives the voltage of the power source 105 and outputs a DC voltage for power feed, a DC outlet 170 as a DC connection unit for feeding the DC voltage for power feed to the external device 500 external to the vehicle, an operating unit 200 through which a user requests power feed from the DC outlet 170 to external device 500, and the vehicle electronic control unit (ECU) 300 which controls the AC output unit (inverter 180) and the DC output unit (power feed relay 160).

The service receptacle 190 is an AC connection unit provided separately from the DC outlet 170 for feeding an AC voltage to an AC electric apparatus (for example, a hair drier, a hot plate, an electric rice cooker, a mobile terminal charger, or the like).

The external device 500 is connected to the DC outlet 170 via a connector 410 and a power cable 440. The power feed ECU 550 controls the inverter 510 in accordance with the result of the detection of electric leakage by the detector 530 and operating states of the power feed start switch 542, the power feed stop switch 544, and the emergency stop switch 546. An output unit 520 may be connected to a switchboard or the like of a house, or to an AC electric apparatus.

The power source 105 on the vehicle side includes the vehicle-mounted battery 110 and the fuel cell 130 for charging the vehicle-mounted battery 110. The vehicle-mounted battery 110 is an electric power storing element configured to be chargeable and dischargeable. The vehicle-mounted battery 110 is configured to include a secondary battery such as, for example, a lithium ion battery, a nickel hydride battery, or a lead storage battery, or a power storage element such as an electric double layer capacitor.

With the configuration described above, even if the vehicle-mounted battery 110 has a small battery capacity, the power feed to the external device 500 can be continued as long as the fuel cell 130 is replenished with fuel.

The operating unit 200 includes a power switch 210, a DC-OUT switch 220, an AC-OUT switch 222, and an AC-OUT lamp 224 integrated with the AC-OUT switch 222.

The power switch 210 is a switch for starting an electric traveling system for the vehicle. For example, when the power switch 210 is pressed once with a brake pedal (not shown) not being operated, the operation mode of the vehicle shifts to an accessory mode (Acc mode) in which some electrical components such as an audio apparatus can be used. Further, when the power switch 210 is pressed twice, the operation mode of the vehicle shifts to an IG-ON mode in which all electrical components can be used. When the power switch 210 is pressed with the brake pedal being depressed, the vehicle enters a state where the motor 135 can be driven by the PCU 120 (Ready-ON).

The AC-OUT switch 222 is a switch for requesting AC in-vehicle power feed from the service receptacle 190. When the AC-OUT switch 222 is operated in the IG-ON mode, the vehicle ECU 300 connects the system main relay 115 and the power feed relay 160 together, and operates the inverter 180 to start supply of AC 100 V to the service receptacle 190.

While the vehicle ECU 300 operates the inverter 180, the vehicle ECU 300 turns on the AC-OUT lamp 224.

The DC-OUT switch 220 is a switch for requesting power feed to the external device 500. When the DC-OUT switch 220 is operated in the IG-ON mode, the vehicle ECU 300 connects the system main relay 115 and the power feed relay 160 at the same time, and starts DC external power feed from the DC outlet 170 to the external device 500.

In this case, it is necessary to consider whether to allow the service receptacle 190 to be used during power feed to the outside of the vehicle. It is often the case that no one is present within the vehicle interior during the power feed to the outside. If power feed from the service receptacle 190 having a relatively large output is allowed in such a case, for example when the user forgets to turn off an electric apparatus or the like with being connected to the service receptacle, power feed may be continued without being noticed by the user, and the apparatus may be operated in an inappropriate state and broken down. In particular, attention should be paid when the electric apparatus is an apparatus having a large power consumption (such as a heating apparatus).

Thus, in the present embodiment, when a request for power feed made by an operation of the AC-OUT switch 222 and a request for power feed made by an operation of the DC-OUT switch 220 conflict with each other, the vehicle ECU 300 gives priority to the operation of the DC-OUT switch 220, as illustrated later with reference to the flowcharts.

When the vehicle ECU 300 receives, from the operating unit 200, an input requesting power feed to the external device 500, the vehicle ECU 300 causes inverter 180 to stop an output of the AC voltage, and makes the power feed relay 160 conductive to cause the DC voltage for power feed to be output to the DC outlet 170.

It is often the case that no one is present within the vehicle interior during the power feed to the outside. With the control as described above, even if an AC electric apparatus (for example, a hair drier, a hot plate, an electric rice cooker, a mobile terminal charger, or the like) is connected to the service receptacle 190 and is left in an operated state, the above control can prevent that the power feed to the AC electric apparatus is continued without being noticed by the user, and the apparatus is operated in an inappropriate state.

Preferably, the AC output unit includes the inverter 180, a relay not shown, and the like, the DC output unit includes the power feed relay 160 which connects the power source 105 and the DC outlet 170, and when the vehicle ECU 300 receives, from the operating unit 200, an input requesting power feed to the external device 500, the vehicle ECU 300 stops an operation of the inverter 180 and makes the power feed relay 160 conductive.

With the configuration as described above, the vehicle ECU 300 can cause the AC output unit (inverter 180) to stop an output of the AC voltage, and cause the DC output unit (power feed relay 160) to output the DC voltage for power feed. It should be noted that, in order to cause the inverter 180 to stop an output of the AC voltage, a relay may be provided at an exit of the inverter 180 to interrupt the output.

Preferably, during the power feed from the DC outlet 170 to the external device 500, the vehicle ECU 300 prohibits an output of the AC voltage from the AC output unit (inverter 180) even if the vehicle ECU 300 receives, from the operating unit 200, a request to use the service receptacle 190.

Further, there may be a case where an upper limit of electric power which can be output as an entire device is set for the power source device for the vehicle. If electric power is output from the AC output unit (inverter 180) to the AC electric apparatus during the power feed to the external device 500 in such a case, the external device 500 in operation may be stopped due to the limited electric power. With the control as described above, during the power feed from the DC outlet 170 to the external device 500, even if a request to supply electric power to the AC electric apparatus connected to the service receptacle 190 is made later, the requested electric power is not supplied to the AC electric apparatus. Accordingly, this can avoid a situation in which the external device 500 is stopped.

Preferably, the power source device for the vehicle further includes a current sensor 162 and a voltage sensor 164 which detect power supplied from the DC outlet 170 to the external device 500. When the power detected by the current sensor 162 and the voltage sensor 164 exceeds a predetermined value, the vehicle ECU 300 causes the DC output unit (power feed relay 160) to stop supply of the DC voltage.

With the configuration described above, the vehicle ECU 300 can determine whether or not to feed power to the external device 500, while monitoring electric power.

Hereinafter, control of power output to the service receptacle 190 and control of power feed to the external device 500 performed by the vehicle ECU 300 will be described with reference to the flowcharts.

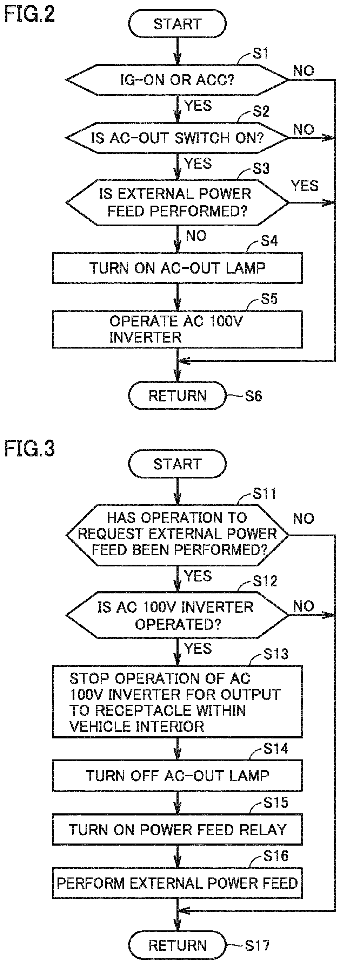

Fig. 2 is a flowchart for illustrating control of power output to the service receptacle 190 performed by the vehicle ECU 300. The processing in the flowchart is invoked from a main routine and performed at regular time intervals or whenever predetermined conditions are satisfied.

Referring to Figs. 1 and 2, in step S1, the vehicle ECU 300 determines whether or not the operation mode of the vehicle is the IG-ON mode or the accessory mode. When the operation mode of the vehicle is the IG-ON mode or the accessory mode in step S1 (YES in S1), the processing proceeds to step S2.

In step S2, the vehicle ECU 300 determines whether or not the AC-OUT switch 222 is operated to an ON state. When the AC-OUT switch 222 is operated to an ON state in step S2 (YES in S2), the processing proceeds to step S3.

In step S3, the vehicle ECU 300 determines whether or not DC external power feed to the external device 500 is currently performed. When DC external power feed is not performed in step S3 (NO in S3), the vehicle ECU 300 turns on the AC-OUT lamp 224 in step S4, and operates the inverter 180 to supply AC 100V to the service receptacle 190 in step S5. Then, the processing proceeds to step S6 where the control is returned to the main routine.

On the other hand, when the operation mode is not any of the IG-ON mode and the accessory mode in step S1, when the AC-OUT switch is not operated to an ON state in step S2, and when DC external power feed is performed in step S3, the processing proceeds to step S6 without performing the processing in steps S4 and S5, and control is returned to the main routine.

In particular, since the processing in step S3 is performed, in the present embodiment, DC external power feed to the DC outlet is given priority over AC in-vehicle power feed to the service receptacle 190. For example, since DC external power feed is also intended to be used in case of emergency such as a disaster and the like, DC external power feed is set to have a higher priority than that of AC in-vehicle power feed. It should be noted that, in such a case, it is desirable to connect the AC electric apparatus to the output unit 520 of the external device 500 or to a branch from the output unit 520, rather than connecting the AC electric apparatus to the service receptacle 190.

Fig. 3 is a flowchart for illustrating control of power feed to the external device 500 performed by the vehicle ECU 300. The processing in the flowchart is invoked from the main routine and performed at regular time intervals or whenever predetermined conditions are satisfied.

Referring to Figs. 1 and 3, in step S11, the vehicle ECU 300 determines whether or not an operation to request DC external power feed has been performed. In one example, the vehicle ECU 300 determines that an operation to request DC external power feed has been performed, when the external device is connected to the DC outlet 170, and the operation mode of the vehicle is set to the IG-ON mode, and the DC-OUT switch 220 is set to an ON state. According to further examples, it is possible that the vehicle ECU 300 determines that an operation to request DC external power feed has been performed in other ways, e.g. when at least one of the following occurs; the external device is connected to the DC outlet 170, the operation mode of the vehicle is set to the IG-ON mode, and/or the DC-OUT switch 220 is set to an ON state. It should be noted that, when the vehicle ECU 300 communicates with the power feed ECU 550 of the external device 500, conditions that power feed start switch 542 is operated to an ON state, and that the power feed stop switch 544 and the emergency stop switch 546 are not operated may be added to the conditions described above.

When it is determined in step S11 that an operation to request DC external power feed has been performed, the processing proceeds to step S12. In step S12, the vehicle ECU 300 determines whether or not the inverter 180, which generates AC power of AC 100V, is in operation. When the inverter 180 is in operation in step S12 (YES in S12), the processing proceeds to step S13. In step S13, the vehicle ECU 300 stops the operation of the inverter 180, which generates AC power of AC 100V to be output to the service receptacle 190, and in step S14, the vehicle ECU 300 turns off the AC-OUT lamp 224. Thereby, even if the AC electric apparatus connected to the service receptacle 190 fails to be turned off, for example, power supply to the AC electric apparatus is interrupted forcibly.

It is conceivable that, in such a situation in which DC external power feed is performed, the AC electric apparatus is left for a long time in a state where no one is present within the vehicle interior. In the case of an electric apparatus including a heat source, such as a hair drier, a hot plate, or an electric rice cooker, for example, even if the electric apparatus is left within the vehicle interior, there is no possibility that overheating or the like may occur, because power supply thereto is interrupted forcibly.

Then, in step S15, the power feed relay 160 is made conductive, and in step S16, DC external power feed to the external device 500 is performed.

It should be noted that, when it is determined in step S11 that an operation to request DC external power feed has not been performed (NO in S11), and when it is determined in step S12 that the inverter 180 is not in operation (NO in S12), control is returned to the main routine in step S17.

Since, according to the present embodiment, the controls shown in Figs. 2 and 3 give priority to external power feed over in-vehicle power feed, the controls can prevent that the AC electric apparatus connected to the service receptacle 190 is operated in an inappropriate state during external power feed in which it is highly likely that no one is present within the vehicle interior.

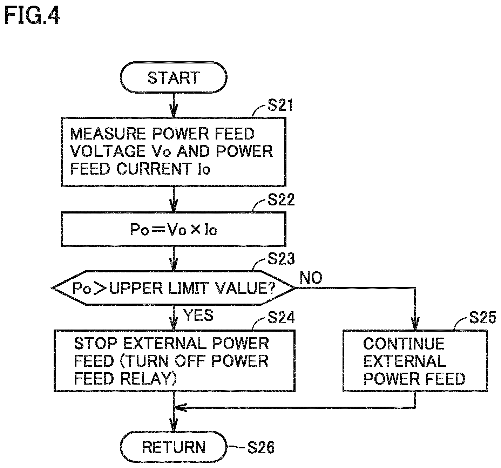

Fig. 4 is a flowchart for illustrating control of power monitoring during the power feed to the external device 500 performed by the vehicle ECU 300. The processing in the flowchart is invoked from the main routine and performed at regular time intervals or whenever predetermined conditions are satisfied, while power feed is performed in step S15 of Fig. 3.

Referring to Figs. 1 and 4, in step S21, the vehicle ECU 300 obtains a power feed voltage Vo from the voltage sensor 164 and a power feed current Io from the current sensor 162. Next, in step S22, the vehicle ECU 300 calculates power feed power Po by computing the product of the current and the voltage.

Next, in step S23, the vehicle ECU 300 determines whether or not power feed power Po exceeds an upper limit value. When Po exceeds the upper limit value in step S23 (YES in S23), the processing proceeds to step S24, and when Po does not exceed the upper limit value (NO in S23), the processing proceeds to step S25.

In step S25, DC external power feed is continued. On the other hand, in step S24, DC external power feed is stopped. In one example, the power feed relay is turned off. When the processing proceeds to step S26 after the processing in step S24 or S25, control is returned to the main routine.

DC external power feed power Po is limited by the upper limit value as shown in Fig. 4 in order to protect the vehicle, protect the external device, and the like. For example, when the vehicle-mounted battery 110 is designed to have as small capacity as possible in order to suppress the cost of the vehicle-mounted battery 110, there may also be a case where, while AC in-vehicle power feed is performed, the upper limit value should be modified to be stricter.

If electric power is output from the AC output unit (inverter 180) to the AC electric apparatus during the power feed to the external device 500 in a case where such control is performed, the external device 500 in operation may be stopped due to the limited electric power. With the controls which give priority to DC external power feed over AC in-vehicle power feed as described in Figs. 2 and 3, during the power feed from the DC outlet 170 to the external device 500, even if a request to supply electric power to the AC electric apparatus connected to the service receptacle 190 is made later, the requested electric power is not supplied to the AC electric apparatus. Accordingly, this can avoid a situation in which the external device 500 is stopped.

It should be noted that, although the present embodiment has described an example in which a service receptacle for AC power feed is provided within a vehicle interior, and a DC outlet is provided to feed power to the outside of a vehicle, it is satisfactory as long as power feed to the outside of the vehicle is given priority over power feed to within the vehicle interior. For example, the service receptacle provided within the vehicle interior may be any of a service receptacle for AC power feed and a service receptacle for DC power feed, and the outlet performing power feed to the outside of the vehicle may also be any of an outlet for AC power feed and an outlet for DC power feed.

Although the embodiment of the present invention has been described, it should be understood that the embodiment disclosed herein is illustrative and non-restrictive in every respect. The scope of the present invention is defined by the scope of the claims, and is intended to include any modifications within the scope and meaning equivalent to the scope of the claims.

As described above, a power source device for a vehicle includes: a power source (105); a DC outlet (170) for feeding power from the power source (105) to an external device (500) external to the vehicle; a service receptacle (190) provided, within a vehicle interior, separately from the DC outlet (170); an operating unit (200) by which a user requests power feed from the DC outlet (170) to the external device (500); and a vehicle ECU (300) which controls power supply from the power source to the DC outlet (170) and the service receptacle (190). When the vehicle ECU (300) receives, from the operating unit (200), an input requesting the power feed to the external device (500), the vehicle ECU (300) stops the power supply to the service receptacle (190) and causes the DC outlet (170) to perform the power supply. With the configuration described above, the possibility of failure to turn off an in-vehicle electric apparatus is reduced.

## Claims

1. A power source device for a vehicle, comprising:
a power source (105);
a first connection unit (170) capable of feeding power from said power source (105) to an external device (500) external to the vehicle;
a second connection unit (190) provided, within a vehicle interior, separately from said first connection unit (170);
an AC output unit (180) configured to receive a voltage of said power source (105) to generate an AC voltage and output the AC voltage to said second connection unit (190);
a DC output unit (160) configured to receive a voltage of said power source (105) and to output a DC voltage for power feed to said first connection unit (170);
an operating unit (200) by which a user requests power feed from said first connection unit (170) to said external device (500); and
a control unit (300) configured to control power supply from said power source (105) to said first connection unit (170) and said second connection unit (190), wherein
when said AC output unit (180) is in operation and said control unit (300) receives, from said operating unit (200), an input requesting the power feed to said external device (500), said control unit (300) is configured to stop the operation of the AC output unit (180) and to perform the power supply to said first connection unit (170).

2. The power source device for the vehicle according to claim 1, wherein, during the power feed from said first connection unit (170) to said external device (500), said control unit (300) is further configured to prohibit power supply from said second connection unit (190) even if said control unit (300) receives, from said operating unit (200), a request to use said second connection unit (190).

3. The power source device for the vehicle according to claim 1, further comprising a power detection unit (162, 164) configured to detect power supplied from said first connection unit (170) to said external device (500), wherein
when the power detected by said power detection unit (162, 164) exceeds a predetermined value, said control unit (300) is configured to limit power supply from said first connection unit (170).

4. The power source device for the vehicle according to any one of claims 1 to 3, wherein
said power source (105) is a DC power source (105),
said AC output unit includes an inverter (180),
said DC output unit includes a power feed relay (160) which is arranged to connect said DC power source (105) and said first connection unit (170), and
when said control unit (300) receives, from said operating unit (200), the input requesting the power feed to said external device (500), said control unit (300) is configured to stop an operation of said inverter (180) and to make said power feed relay (160) conductive.

5. The power source device for the vehicle according to claim 1, wherein said power source (105) includes
a secondary battery (110), and
a fuel cell (130) for charging said secondary battery (110).

6. A method of controlling power supply from a power source (105) of a vehicle, comprising:
controlling power supply from said power source (105) to a first connection unit (170) capable of feeding power from said power source (105) to an external device (500), and a second connection unit (190) provided, within a vehicle interior, separately from said first connection unit (170), wherein an AC output unit (180) receives a voltage of said power source (105) to generate an AC voltage and outputs the AC voltage to said second connection unit (190) and a DC output unit (160) receives a voltage of said power source (105) and outputs a DC voltage for power feed to said first connection unit (170), and
when said AC output unit (180) is in operation and a request for power feed from said first connection unit (170) to an external device (500) is received, stopping the operation of said AC output unit (180) and performing the power supply to said first connection unit (170).

## Patentansprüche

1. Stromquellenvorrichtung für ein Fahrzeug mit:
einer Stromquelle (105);
einer ersten Verbindungseinheit (170), die in der Lage ist, Strom von der Stromquelle (105) zu einer externen Vorrichtung (500) extern zu dem Fahrzeug zu transportieren;
einer zweiten Verbindungseinheit (190), die innerhalb eines Fahrzeuginnenraums getrennt von der ersten Verbindungseinheit (170) bereitgestellt ist;
einer Wechselstromausgabeeinheit (180), die konfiguriert ist, eine Spannung der Stromquelle (105) zu empfangen, um eine Wechselstromspannung zu erzeugen, und die Wechselstromspannung zu der zweiten Verbindungseinheit (190) auszugeben;
einer Gleichstromausgabeeinheit (160), die konfiguriert ist, eine Spannung der Stromquelle (105) zu empfangen und eine Gleichstromspannung für eine Stromzufuhr zu der ersten Verbindungseinheit (170) auszugeben;
einer Bedienungseinheit (200), durch die ein Benutzer eine Stromzufuhr von der ersten Verbindungseinheit (170) zu der externen Vorrichtung (500) anfordert; und
einer Steuerungseinheit (300), die konfiguriert ist, eine Stromzufuhr von der Stromquelle (105) zu der ersten Verbindungseinheit (170) und der zweiten Verbindungseinheit (190) zu steuern, wobei,
wenn die Wechselstromausgabeeinheit (180) in Betrieb ist und die Steuerungseinheit (300) von der Bedienungseinheit (200) eine Eingabe empfängt, die die Stromzufuhr zu der externen Vorrichtung (500) anfordert, die Steuerungseinheit (300) konfiguriert ist, den Betrieb der Wechselstromausgabeeinheit (180) zu stoppen und die Stromzufuhr zu der ersten Verbindungseinheit (170) auszuführen.

2. Stromquellenvorrichtung für das Fahrzeug nach Anspruch 1, wobei während der Stromzufuhr von der ersten Verbindungseinheit (170) zu der externen Vorrichtung (500) die Steuerungseinheit (300) ferner konfiguriert ist, eine Stromzufuhr von der zweiten Verbindungseinheit (190) zu verhindern, auch wenn die Steuerungseinheit (300) von der Bedienungseinheit (200) eine Anforderung empfängt, die zweite Verbindungseinheit (190) zu verwenden.

3. Stromquellenvorrichtung für das Fahrzeug nach Anspruch 1, ferner mit einer Stromerfassungseinheit (162, 164), die konfiguriert ist, einen Strom, der von der ersten Verbindungseinheit (170) zu der externen Vorrichtung (500) zugeführt wird, zu erfassen, wobei,
wenn der Strom, der durch die Stromerfassungseinheit (162, 164) erfasst wird, einen vorbestimmten Wert überschreitet, die Steuerungseinheit (300) konfiguriert ist, eine Stromzufuhr von der ersten Verbindungseinheit (170) zu begrenzen.

4. Stromquellenvorrichtung für das Fahrzeug nach einem der Ansprüche 1 bis 3, wobei
die Stromquelle (105) eine Gleichstromleistungsquelle (105) ist,
die Wechselstromausgabeeinheit einen Wechselrichter (180) umfasst,
die Gleichstromausgabeeinheit ein Stromzufuhrrelais (160) umfasst, das eingerichtet ist, die Gleichstromleistungsquelle (105) und die erste Verbindungseinheit (170) zu verbinden, und,
wenn die Steuerungseinheit (300) von der Bedienungseinheit (200) die Eingabe, die die Stromzufuhr zu der externen Vorrichtung (500) anfordert, empfängt, die Steuerungseinheit (300) konfiguriert ist, einen Betrieb des Wechselrichters (180) zu stoppen und das Stromzufuhrrelais (160) leitend zu machen.

5. Stromquellenvorrichtung für das Fahrzeug nach Anspruch 1, wobei die Stromquelle (105)
eine Sekundärbatterie (110) und
eine Brennstoffzelle (130) für ein Aufladen der Sekundärbatterie (110) umfasst.

6. Verfahren zum Steuern einer Stromzufuhr von einer Stromquelle (105) eines Fahrzeugs, mit:
einem Steuern einer Stromzufuhr von der Stromquelle (105) zu einer ersten Verbindungseinheit (170), die in der Lage ist, Strom von der Stromquelle (105) zu einer externen Vorrichtung (500) zu transportieren, und einer zweiten Verbindungseinheit (190), die innerhalb eines Fahrzeuginnenraums getrennt von der ersten Verbindungseinheit (170) bereitgestellt ist, wobei eine Wechselstromausgabeeinheit (180) eine Spannung der Stromquelle (105) empfängt, um eine Wechselstromspannung zu erzeugen, und die Wechselstromspannung an die zweite Verbindungseinheit (190) ausgibt, und eine Gleichstromausgabeeinheit (160) eine Spannung der Stromquelle (105) empfängt und eine Gleichstromspannung für eine Stromzufuhr zu der ersten Verbindungseinheit (170) ausgibt, und,
wenn die Wechselstromausgabeeinheit (180) in Betrieb ist und eine Anforderung für eine Leistungszufuhr von der ersten Verbindungseinheit (170) zu einer externen Vorrichtung (500) empfangen wird, einem Stoppen des Betriebs der Wechselstromausgabeeinheit (180) und einem Ausführen der Stromzufuhr zu der ersten Verbindungseinheit (170).

## Revendications

1. Dispositif de source de puissance pour véhicule, qui comprend :
une source de puissance (105) ;
une première unité de raccordement (170) capable de fournir une puissance qui provient de ladite source de puissance (105) à un dispositif externe (500) externe au véhicule ;
une seconde unité de raccordement (190), prévue, dans un habitacle de véhicule, séparément de ladite première unité de raccordement (170) ;
une unité de sortie CA (180) configurée pour recevoir une tension de ladite source de puissance (105) afin de générer une tension CA et pour fournir la tension CA à ladite seconde unité de raccordement (190) ;
une unité de sortie CC (160) configurée pour recevoir une tension de ladite source de puissance (105) et pour délivrer une tension CC pour alimenter en puissance ladite première unité de raccordement (170) ;
une unité d'exploitation (200) grâce à laquelle un utilisateur demande une alimentation en puissance entre ladite première unité de raccordement (170) et ledit dispositif externe (500) ; et
une unité de commande (300) configurée pour réguler l'alimentation en puissance entre ladite source de puissance (105) et ladite première unité de raccordement (170) et ladite seconde unité de raccordement (190), dans lequel
lorsque ladite unité de sortie CA (180) fonctionne et ladite unité de commande (300) reçoit, de la part de ladite unité d'exploitation (200), une entrée qui demande l'alimentation en puissance dudit dispositif externe (500), ladite unité de commande (300) est configurée pour arrêter le fonctionnement de l'unité de sortie CA (180) et pour assurer l'alimentation en puissance de ladite première unité de raccordement (170).

2. Dispositif de source de puissance pour véhicule selon la revendication 1, dans lequel, pendant l'alimentation en puissance entre ladite première unité de raccordement (170) et ledit dispositif externe (500), ladite unité de commande (300) est en outre configurée pour empêcher l'alimentation en puissance par ladite seconde unité de raccordement (190) même si ladite unité de commande (300) reçoit, de la part de ladite unité d'exploitation (200), une demande d'utilisation de ladite seconde unité de raccordement (190).

3. Dispositif de source de puissance pour véhicule selon la revendication 1, qui comprend en outre une unité de détection de puissance (162, 164) configurée pour détecter une puissance fournie par ladite première unité de raccordement (170) audit dispositif externe (500), dans lequel
lorsque la puissance détectée par ladite unité de détection de puissance (162, 164) dépasse une valeur prédéterminée, ladite unité de commande (300) est configurée pour limiter l'alimentation en puissance par ladite première unité de raccordement (170).

4. Dispositif de source de puissance pour véhicule selon l'une quelconque des revendications 1 à 3, dans lequel
ladite source de puissance (105) est une source de puissance CC (105),
ladite unité de sortie CA comprend un inverseur (180),
ladite unité de sortie CC comprend un relais d'alimentation en puissance (160) qui est prévu pour relier ladite source de puissance CC (105) et ladite première unité de raccordement (170), et
lorsque ladite unité de commande (300) reçoit, de la part de ladite unité d'exploitation (200), l'entrée qui demande l'alimentation en puissance dudit dispositif externe (500), ladite unité de commande (300) est configurée pour arrêter ledit inverseur (180) et pour rendre ledit relais d'alimentation en puissance (160) conducteur.

5. Dispositif de source de puissance pour véhicule selon la revendication 1, dans lequel ladite source de puissance (105) comprend
une batterie secondaire (110), et
une pile à combustible (130) destinée à charger ladite batterie secondaire (110).

6. Procédé de régulation d'alimentation en puissance, par une source de puissance (105), d'un véhicule, qui comprend :
la régulation de l'alimentation en puissance, par ladite source de puissance (105), d'une première unité de raccordement (170) capable de fournir une puissance entre ladite source de puissance (105) et un dispositif externe (500), et d'une seconde unité de raccordement (190) prévue, dans un habitacle de véhicule, séparément de ladite première unité de raccordement (170), dans lequel une unité de sortie CA (180) reçoit une tension de ladite source de puissance (105) afin de générer une tension CA, et délivre la tension CA à ladite seconde unité de raccordement (190), et une unité de sortie CC (160) reçoit une tension de ladite source de puissance (105) et délivre une tension CC destinée à l'alimentation en puissance de ladite première unité de raccordement (170), et
lorsque ladite unité de sortie CA (180) fonctionne et qu'une demande d'alimentation en puissance entre ladite première unité de raccordement (170) et un dispositif externe (500) est reçue, l'arrêt de ladite unité CA de sortie (180) et l'exécution de l'alimentation en puissance de ladite première unité de raccordement (170).
